**Europäisches Patentamt**

**European Patent Office**

**Office européen des brevets**

(19)

(11) Publication number: **0 051 617**
**B1**

(12) EUROPEAN PATENT SPECIFICATION

(45) Date of publication of patent specification: **27.12.84**

(21) Application number: **81901142.0**

(22) Date of filing: **14.05.81**

(86) International application number:
**PCT/GB81/00088**

(87) International publication number:
**WO 81/03326 26.11.81 Gazette 81/28**

(51) Int. Cl.³: **C 04 B 33/34,** C 04 B 41/06,
C 04 B 33/24

(54) **METHOD FOR THE MANUFACTURE OF PHOSPHATIC CERAMIC BODIES.**

(30) Priority: **15.05.80 GB 8016129**

(43) Date of publication of application:
**19.05.82 Bulletin 82/20**

(45) Publication of the grant of the patent:
**27.12.84 Bulletin 84/52**

(84) Designated Contracting States:
**AT CH DE FR GB LI LU NL SE**

(56) References cited:
**DE-A-1 911 833**
**GB-A- 253 184**
**GB-A- 391 646**
**GB-A-1 223 926**
**GB-A-1 454 263**
**GB-A-2 015 558**
**US-A-1 749 642**

(73) Proprietor: **UNITED STATES BORAX &**
**CHEMICAL CORPORATION**
**3075 Wilshire Boulevard**
**Los Angeles, California (US)**

(72) Inventor: **THOMPSON, Raymond**
**"The Garth" 7 Winchester Close**
**Esher, Surrey (GB)**
Inventor: **COLLINS, John Frederick**
**"Bodinnick" Lewes Road East Grinstead**
**West Sussex (GB)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

## Description

Technical Field

This invention relates to the production of glazed phosphatic ceramic bodies, such as bone china, and provides a new method for making the bodies.

Background Art

Bone china is presently made by firing a mixture of clay, bone ash and a flux. Normally the clay is predominantly kaolin or china clay. The most commonly used flux is Cornish Stone but other naturally-occurring felspathic materials such as nepheline syenite may be used.

Bone ash such as used in the production of bone china is made by first of all treating animal bone with hot or boiling water so as to remove gelatine, collagen and other organic matter. In this state the bone is said to be de-gelatinised. It is afterwards calcined to a temperature of about 1000°C in order to burn off the remaining organic matter. Calcined bone or bone ash is substantially (about 80 percent) calcium phosphate, with some calcium carbonate and a little fluoride.

Ceramic compositions for making bone china comprise typically 50% bone ash, 25% china clay and 25% Cornish stone. They are made into a ceramic body by intimately mixing and usually wet milling the particulate ingredients so as to produce an aqueous slurry or slip suitable for casting in plaster moulds; or at lower water content a plastic clay, which may be moulded or shaped. After drying to evaporate the water such shaped objects in the "green" state are then fired to a temperature in the region of 1250°C in order to produce unglazed "china biscuit" ware of low porosity and characteristic translucency. The biscuit ware is subsequently coated with a glaze slip and refired to a temperature of about 1100°C to produce glazed china. One of the principal characteristics of ware produced in this way is the translucency, coupled with whiteness, for which bone china (sometimes called fine china or English bone china) is renowned. Because of its strength it is also possible to produce objects of thinner wall section than is the case with other forms of pottery, which enhances lightness of weight, translucency and resistance to thermal shock.

Bone china of substantially the above type and composition has been produced for some two hundred years and changes in formulation and fabrication have been evolutionary. The composition requires a higher firing temperature than is needed for earthenware and consequently the firing cycle is comparatively prolonged and the costs of both the kilns and fuel used are higher.

The firing time is also lengthened relative to earthenware in order to allow formation of the calcium phosphate-based phases which impart the characteristic strength and translucency.

Disclosure of Invention

The invention provides a method for manufacturing glazed phosphatic ceramic bodies wherein a glazed product having the characteristic translucency of bone china is obtained with but a single firing of the green body.

The method of the invention comprises forming a green body of a composition containing a source of alumina, a source of silica and a calcium phosphate on which has been incorporated by calcination a source of $B_2O_3$, applying a glaze to the green body, and firing the glazed green body in a single stage to provide the glazed phosphatic ceramic body.

Preferably clay (particularly china clay or kaolin) is used as a source of both alumina and silica. However, it is possible to use a mixture of a source of alumina (for example from bauxite) and a source of silica (such as quartz, calcined sand or calcined flint).

By the term "phosphatic ceramic bodies" we mean those ceramic bodies containing a source of calcium phosphate as a major ingredient, whether it be natural or synthetic. These products are typified by bone china where clay provides a source of both alumina and silica and the source of phosphate is animal bones. The following description refers to the production of glazed bone china by a single firing stage process but it should be understood that the method is applicable to the preparation of other phosphatic ceramic bodies.

Glazed bone china, having the translucency of the product produced by the conventional process, can be obtained in accordance with the invention by one firing of a glazed green body. This preferably is achieved by using, as a source of bone ash, borated bone as described in U.K. Published Application No 2015558A.

This published Application describes a bone ash for the manufacture of bone china comprising calcined bone on which has been incorporated by calcination a source of boric oxide. The borated bone ash to be used in accordance with the present invention preferably contains 1.5 to 7.5%, especially 2.5 to 5%, by weight $B_2O_3$. A preferred source of boric oxide for use in preparing borated bone ash for use in the method of the present invention is a ground vitreous frit composition comprising, in terms of oxides, 20—50% $B_2O_3$, 5—15% $Na_2O$, 5—15% CaO, optionally up to 10% $Al_2O_3$, and, the balance being $SiO_2$ subject to the proviso that the composition contains at least 25% $SiO_2$, all percentages being by weight. These frit compositions may be prepared in a manner similar to that described in U.K. Patent Specification No. 1,254,717 in which we claim a ground vitreous frit which includes boric oxide in its oxide analysis, in particular a ground vitreous frit having an analysis, in terms of oxides: $SiO_2$ — 20 to 55%; $B_2O_3$ — 40 to 45%; CaO and/or MgO — 5 to 30%; and $Na_2O$ — 0 to 15%.

Borated bone ash for use in the method of the invention can be prepared by de-gelatinising animal bone, mixing the de-gelatinised bone with a substance which when calcined makes available $B_2O_3$ for combination with the bone or which contains $B_2O_3$ and when calcined combines with the bone and then calcining the mixture whereby boric oxide or a precursor thereof is absorbed or adsorbed on to the bone. The source of boric oxide may be a water-soluble chemical compound of boric oxide in which case fragments of the bone are steeped in an aqueous solution or suspension of said chemical compound. Preferably, however, the source of boric oxide is a ground vitreous frit having boric oxide in its oxide analysis, and then a mere mixture of the de-gelatinised bone and the powdered frit can be calcined with satisfactory results as described in U.K. Specification No. 1,254,717.

A typical composition from which the green body is prepared when making bone china according to the present invention comprises 55 parts by weight borated bone ash and 45 parts by weight of china clay.

The green body can be prepared for example by slip casting, moulding or dust pressing, or by shaping a plastic clay composition.

In a modification of the invention the compositions from which the green body is prepared may contain such optional ingredients as ball clays and bentonite which can be added in amounts which do not significantly affect the translucency of the final product.

The invention is illustrated by the following Examples.

## Example 1

A body composition comprising 55 parts by weight of bone ash, pretreated as described in U.K. Published Application No. 2015558A with a flux comprising $B_2O_3$ — 35% w/w, $Na_2O$ — 10% w/w, CaO — 10% w/w and $SiO_2$ — 45% w/w to give 5% w/w $B_2O_3$ on the calcined bone, and 45 parts by weight china clay was mixed with water to give a casting slip with a density of 1.75 to 1.8 kg/dm³ (35 to 36 oz per Imperial pint). The slip was deflocculated by the addition of $\frac{1}{2}$% by weight of deflocculating agent (Dispex N 40 — 40% solution of the sodium salt of a polyacrylate), based on the body weight, and used to prepare slip cast cups. The cups were dried at 110°C then cooled and glazed with Podmore's glaze P2108 (a lead-free transparent glaze) which was applied as a slip by spraying. The cups were dried and then fired to a temperature of 1150°C at the rate of 100°C per hour with a two hour soak at the peak temperature.

After cooling the cups showed no blistering nor distortion, and had a good adherent glaze and high translucency.

## Example 2

A body composition was prepared comprising 55 parts by weight of bone ash as described in Example 1, 43 parts by weight china clay and 2 parts by weight ball clay. Cups were prepared according to the method given in Example 1 and were fired to a temperature of 1150°C at a rate of 150°C an hour with a two hour soak at the peak temperature.

After cooling the cups showed no blistering nor distortion, and had a good adherent glaze and high translucency.

## Example 3

In a commercial process organic matter is recovered from bone by dissolving the bone in acid. After filtration the calcium phosphate species is precipitated as chloroapatite. This is converted to hydroxyapatite by treatment with ammonia. The hydroxyapatite was pretreated with a flux comprising $B_2O_3$ — 35% w/w, $Na_2O$ — 10% w/w, CaO — 10% w/w and $SiO_2$ — 45% w/w as described in U.K. Published Application No. 2015558A for pretreating de-gelatinised bone to give 5% w/w $B_2O_3$ on the calcined product.

A body composition comprising 55 parts by weight of the above product and 45 parts by weight china clay was prepared, fabricated, glazed and fired as described in Example 1.

After cooling the cups showed no blistering nor distortion and had a good adherent glaze and high translucency.

## Example 4

A slip was prepared according to the composition and method described in Example 1 and fed to a spray drying apparatus. The spray dried powder was fabricated into flatware by dust pressing, sprayed with glaze and fired as described in Example 1.

After cooling the flatware showed no bistering nor distortion and has a good adherent glaze and high translucency.

## Example 5

A slip was prepared according to the method described in Example 1 comprising 55 parts by weight refluxed bone, 21 parts by weight finely ground quartz and 27 parts by weight alumina hydrate. This was spray dried, dust pressed, glazed and fired as described in Example 4.

After cooling the ware showed no blistering nor distortion and had a good adherent glaze and high translucency.

## Example 6

A body composition comprising 55 parts by weight of bone ash, pretreated as described in U.K. Published Application No. 2015558A with a flux comprising $B_2O_3$ — 35% w/w, $Na_2O$ — 10% w/w, CaO — 10% w/w and $SiO_2$ — 45% w/w to give 3.3% $B_2O_3$ on the calcined bone and 45 parts by weight china clay was mixed with sufficient water to give a fluid slip. After thorough mixing the slip was passed through a sieve having apertures of 0.075 mm (200 mesh British Standard screen) and filtered on a filter press to a plastic cake containing about 20% water, This was put through a deaerating pugmill and slugs cut from the product fed into an automatic machine which formed mug by high pressure jolleying into a plaster of paris mould. On demoulding handles formed from the same body were applied. The mugs were dipped in a glaze slurry, foot wiped, dried and fired in a gas fired kiln to a peak temperature of 1140°C.

After cooling, the mugs showed not blistering nor distortion and has a good adherent glaze and high translucency.

## Claims

1. A method of making a glazed phosphatic ceramic body by firing and glazing a shaped green body, characterised by forming a green body of a composition containing a source of alumina, a source of silica and a calcium phosphate on which has been incorporated by calcination a source of $B_2O_3$, applying a glaze to the green body, and firing the glazed green body in a single stage to provide the glazed phosphatic ceramic body.

2. A method according to claim 1 wherein clay is used as a source of both alumina and silica.

3. A method according to claim 1 wherein the calcium phosphate is a bone ash comprising calcined bone on which has been incorporated by calcination a source of $B_2O_3$.

4. A method according to claim 3, in which the source of $B_2O_3$ is a ground vitreous frit whose oxide analysis includes $B_2O_3$.

5. A method according to claim 4, in which the frit has an oxide analysis including $B_2O_2$, $SiO_2$, $Na_2O$ and one or both of CaO and MgO.

6. A method according to claim 5 in which the frit includes also $Al_2O_3$.

7. A method according to claim 5 or 6 in which the frit comprises 20 to 50% $B_2O_3$, 5 to 15% $Na_2O$, 5 to 15% CaO, optionally up to 10% $Al_2O_3$, and the balance being $SiO_2$, subject to the proviso that the composition contains at least 25% $SiO_2$, all percentages being by weight.

8. A method according to claim 3 wherein the bone ash contains 1.5 to 7.5% by weight $B_2O_3$.

## Patentansprüche

1. Verfahren zur Herstellung glasierter phosphatischer Keramikkörper durch Brennen und Glasieren eines grünen Formkörpers, dadurch gekennzeichnet, daß man einen grünen Formkörper aus einer Masse enthaltend eine Quelle für aluminiumoxid und für Siliciumoxid und Calciumphosphat, auf welches durch Brennen eine Quelle für $B_2O_3$ aufgebracht worden ist, formt, den grünen Formkörper glasiert und den glasierten grünen Formkörper in einer einzigen Stufe brennt.

2. Verfahren nach Anspruch 1, worin als Quelle für Aluminiumoxid und siliciumdioxid Ton verwendet wird.

3. Verfahren nach Anspruch 1, worin Calciumphosphat Knochenasche ist, enthaltend gebrannte Knochen, auf welche durch Brennen eine Quelle für $B_2O_3$ eingebracht worden ist.

4. Verfahren nach Anspruch 3, worin die Quelle für $B_2O_3$ eine gemahlene Glasfritte ist, deren Analyse der Oxide $B_2O_3$ aufweist.

5. Verfahren nach Anspruch 4, worin die analyse der Oxide der Fritte $B_2O_3$, $SiO_3$, $Na_2O$ und CaO und/oder MgO aufweist.

6. Verfahren nach Anspruch 5, worin die Fritte zusätzlich $Al_2O_3$ enthält.

7. Verfahren nach Anspruch 5 oder 6, worin die Fritte 20 bis 50 % $B_2O_3$, 5 bis 15 % $Na_2O$, 5 bis 15 % CaO, gegebenenfalls bis 10 % $Al_2O_3$, Rest $SiO_2$ enthält, mit der Maßgabe, daß die Masse zumindest 25 % $SiO_2$ (Gew.-%) enthält.

8. Verfahren nach Anspruch 3, worin die Knochenasche 1,5 bis 7,5 Gew.-% $B_2O_3$ enthält.

## Revendications

1. Procédé de fabrication d'un corps céramique phosphatique émaillé, par cuisson et émaillage d'un corps vert façonné, caractérisé en ce qu'on forme un corps vert, ayant une composition contenant une source d'alumine, une source de silice et un phosphate de calcium dans lequel a été incorporée par calcination une source de $B_2O_3$, qu'on applique une couverte sur le corps vert, et qu'on ait le corps vert émaillé dans une étape unique pour donner un corps céramique phosphatique émaillé.

2. Procédé selon la revendication 1, dans lequel on utilise de l'argile en tant que source d'alumine et de silice.

3. Procédé selon la revendication 1, dans lequel le phosphate de calcium est une poudre d'os comprenant des os calcinés auxquels a été incorporée par calcination une source de $B_2O_3$.

4. Procédé selon la revendication 3, dans lequel la source de $B_2O_3$ est une fritte vitreuse broyée dont l'analyse des oxydes comprend $B_2O_3$.

5. Procédé selon la revendication 4, dans lequel la fritte a une analyse des oxydes comprenant $B_2O_3$, $SiO_2$, $Na_2O$ et l'un ou les deux des oxydes CaO et MgO.

6. Procédé selon la revendication 5, dans lequel la fritte comprend aussi $Al_2O_3$.

7. Procédé selon la revendication 5 ou 6, dans lequel la fritte comprend 20 à 50 % de $B_2O_3$, 5 à 15 % de $Na_2O$, 5 à 15 % de CaO, facultativement jusqu'à 10 % de $Al_2O_3$, et le reste étant $SiO_2$, à la condition que la composition contienne au moins 25 % de $SiO_2$, tous les pourcentages étant en poids.

8. Procédé selon la revendication 3, selon lequel la poudre d'os contient 1,5 à 7,5 % en poids de $B_2O_3$.